Europäisches Patentamt

European Patent Office

Office européen des brevets

(11) Veröffentlichungsnummer: **0 484 817 B1**

(12) # EUROPÄISCHE PATENTSCHRIFT

(45) Veröffentlichungstag der Patentschrift: **20.09.95**

(51) Int. Cl.⁶: **B32B 27/32**, B32B 7/02, B65D 65/40

(21) Anmeldenummer: **91118523.9**

(22) Anmeldetag: **30.10.91**

(54) **Heisssiegelfähige Verpackungsfolie.**

(30) Priorität: **07.11.90 DE 4035343**

(43) Veröffentlichungstag der Anmeldung:
**13.05.92 Patentblatt 92/20**

(45) Bekanntmachung des Hinweises auf die
Patenterteilung:
**20.09.95 Patentblatt 95/38**

(84) Benannte Vertragsstaaten:
**BE DE ES FR GB IT NL**

(56) Entgegenhaltungen:
EP-A- 0 053 925     EP-A- 0 126 640
EP-A- 0 252 718     EP-A- 0 273 680
EP-A- 0 321 220     EP-A- 0 351 391
DE-A- 2 735 547     DE-A- 2 923 754
DE-A- 3 247 999     US-A- 4 343 852

**WORLD PATENTS INDEX, Week 23, Derwent
PublicationsLtd., London, GB; AN 78-40948A
& JP-A-53 045 389**

(73) Patentinhaber: **HOECHST AKTIENGESELL-
SCHAFT**

**D-65926 Frankfurt am Main (DE)**

(72) Erfinder: **Bothe, Lothar Dr.
Kurt-Schumacher-Strasse 69E
W-6500 Mainz-Gonsenheim (DE)**
Erfinder: **Dolle, Volker, Dr.
Hattersheimer Strasse 5
W-6233 Kelkheim (DE)**
Erfinder: **Winter, Andreas, Dr.
Taunusblick 10
W-6246 Glashütten 2 (DE)**
Erfinder: **Wilhelm, Thomas, Dr.
Justinus-Kerner-Strasse 18
W-7519 Sulzfeld (DE)**

**Beschreibung**

Die Erfindung betrifft eine Polyolefinfolie, die aus einer Polypropylenbasisschicht und mindestens einer Deckschicht aus einem Propylenpolymeren besteht.

Polypropylenfolien, die aus einer Polypropylenbasisschicht und Polypropylendeckschichten bestehen, wurden bisher vielfach beschrieben. Die beschriebenen Folien zeichnen sich durch ein gutes Eigenschaftsbild, insbesondere sehr gute optische Eigenschaften und Kratzfestigkeit, aus. Sie können allerdings nicht auf automatischen Verpackungsmaschinen verarbeitet werden, da sie sehr schlechte Heißsiegeleigenschaften aufweisen. Bei Einsatz von orientierten Folien müssen zum Versiegeln so hohe Temperaturen angewendet werden, daß es zu einem starken Schrumpf in der Siegelzone kommt. Die hergestellten Verpackungen zeigen ein nicht akzeptables Erscheinungsbild, wobei die Siegelnahtfestigkeiten gering sind. Außerdem sind die Bedruckungseigenschaften und Beschichtungseigenschaften von orientierten Polypropylenfolien verbesserungswürdig. Die Oberflächenbehandlung der Folien (z. B. Coronabehandlung oder Flammbehandlung) verbessert zwar diese Eigenschaften, wobei diese Verbesserung aber mit der Lagerzeit oft schnell abnimmt bzw. oft unzureichend ist.

Zur Beseitigung dieser Nachteile versieht man orientierte Polypropylenfolien daher in der Regel mit sogenannten Siegelschichten auf Basis von statistischen Copolymerisaten aus Propylen und anderen $\alpha$-Olefinen, Polyethylen oder entsprechenden Polymerblends. Derartige Siegelschichten besitzen aber den Nachteil, daß sie die optischen Eigenschaften der orientierten Polypropylenfolien verschlechtern. Weiterhin lassen ihre Siegeleigenschaften, insbesondere bei niedrigen Siegeltemperaturen, oft noch zu wünschen übrig.

Die Beschichtung von Polypropylenfolien mit Dispersionen enthaltend Polyvinylidenchlorid oder verschiedene Polyacrylate führt zwar auch zu siegelbaren Folien, wobei diese Folien allerdings teuer sind und den entscheidenden Nachteil aufweisen, daß sie nicht regenerierbar sind, d. h. daß während der Folienherstellung zwangsläufig anfallendes Verschnittmaterial, wegen der darauf aufgetragenen Beschichtung, nicht mehr in den Produktionsprozeß zurückgeführt werden kann. Dieser Nachteil ist aber aus ökologischen Gründen nicht mehr akzeptabel.

Die EP-A-0 351 391 beschreibt syndiotaktische Propylenpolymere mit einer Kettenstruktur, in welcher Blöcke von sich wiederholenden racemischen Diaden durch Einheiten aus Mesotriaden verbunden sind. Die beschriebenen Polymeren sind hochkristallin und bestehen zu einem hohen Prozentsatz aus den racemischen Diaden.

Die EP-A-0 273 680 betrifft siegelfähige mehrschichtige Folien aus einer Basisschicht und beidseitigen Deckschichten. Die Basisschicht besteht aus einem kristallinen Polyolefin und enthält ein Antistatikum als Additiv.

Die Deckschichten bestehen aus einem Polymeren mit einer im Vergleich zur Basisschicht niedrigen Stereoregularität. Beide Deckschichten enthalten ein Antiblockmittel. Eine Deckschicht enthält Silikonöl, welches beim Aufwickeln der Folie durch den Kontakt der beiden Oberflächen auf die andere Deckschicht übertragen wird. Die Folien zeichnen sich durch eine gute Heißsiegelfähigkeit und einen niedrigen Reibungskoeffizienten aus.

Die US-A-4 343 852 beschreibt schrumpffähige Verpackungsfolien aus einer Basisschicht und mindestens einer Deckschicht. Die Basisschicht enthält Propylenpolymer. Die Deckschicht enthält mindestens zwei Polymere, welche aus der folgenden Gruppe ausgewählt werden: (A) ein Propylen-Ethylen-Copolymer mit einem Ethylengehalt von 0,5 bis 10 %; (B) ein Propylen-Copolymer mit 5 bis 30 % eines $\alpha$-Olefins mit 4 bis 10 Kohlenstoffatomen als Comonomer; (C) ein Buten-Copolymer mit 1 bis 30 % eines $\alpha$-Olefins mit 4 bis 10 Kohlenstoffatomen als Comonomer. Die beschriebene Folie zeichnet sich durch besondere Schrumpfeigenschaften aus, die ein enges und faltenfreies Anliegen der Verpakkungsfolie gewährleisten.

Die EP-A-0 126 640 beschreibt siegelfähige Mehrschichtfolien aus einer Bassischicht und mindestens einer Deckschicht. Die Basisschicht besteht aus kristallinem Propylenpolymer. Die Deckschicht besteht aus einem statistischen Propylen-Ethylen-Copolymer mit einem Ethylengehalt von 3 bis 5 Gew.-%, welches 1 bis 5 Gew.-% eines Polymers mit einem Mw <6 000 enthält, oder aus einem kristallinen Ethylen-Propylen-Buten-1-Copolymer mit einem Ethylengehalt von 1 bis 10 Gew.-% und einem Butengehalt von 4 bis 30 Gew.-%, welches 1 bis 5 Gew.-% eines Polymers mit einem Mw <6 000 enthält. Die Folie zeichnet sich durch eine niedrige Siegeltemperatur, eine hohe Transparenz und gute Antiblockeigenschaften aus.

Mit der Erfindung soll Polypropylenfolie zur Verfügung gestellt werden, die gleichzeitig gute Siegeleigenschaften, d. h. hohe Siegelnahtfestigkeit bei möglichst niedrigen Siegeltemperaturen, und sehr gute optische Eigenschaften, d. h. hohen Glanz und hohe Transparenz (bei transparenten Folien), aufweisen soll und die zusätzlich dazu auch noch problemlos als Regenerat zu dem Produktionsprozeß zurückgeführt werden kann. Weiterhin soll die Folie eine gute Kratzfestigkeit aufweisen, und die Oberflächenbehandelbar-

EP 0 484 817 B1

keit der Folie und die Beschichtbarkeit sollen gut sein.

Die erfindungsgemäßen Polypropylenfolien bestehen mindestens aus zwei Schichten, wobei die Basisschicht ein Propylenpolymeres enthält, das zum überwiegenden Teil aus Propylen besteht und einen Schmelzpunkt von 140 °C oder höher besitzt, und die Deckschicht aus einem Copolymeren aus $\alpha$-Olefinen mit 2 bis 8 C-Atomen mit syndiotaktischem Propylen aufgebaut ist.

Die Basisschicht der siegelbaren polyolefinischen Mehrschichtfolie besteht vorzugsweise aus einem Propylenpolymeren, das einen Schmelzpunkt von 150 °C oder höher besitzt.

Isotaktisches Polypropylen mit einem n-heptanlöslichen Anteil von 15 Gew.-% und weniger, Copolymere von Ethylen und Propylen mit einem Ethylengehalt von 10 Gew.-% oder weniger, Copolymere von Polypropylen mit $C_4$-$C_8$-$\alpha$-Olefinen mit einem $C_4$-$C_8$-$\alpha$-Olefingehalt von 10 Gew.-% oder weniger stellen spezielle Beispiele für das Polypropylenpolymere der Basisschicht dar.

Das Propylenpolymere der Basisschicht hat zweckmäßig einen Schmelzflußindex von 0,5 g/10 min bis 8 g/10 min bei 230 °C und 21,6 N Belastung (DIN 53735), insbesondere von 1,5 g/10 min bis 4 g/10 min.

Die Basisschicht kann in einer besonderen Ausgestaltungsform der Erfindung zusätzlich bis zu 40 Gew.-%, vorzugsweise bis zu 30 Gew.-%, bezogen auf das Gesamtgewicht der Basisschicht, inertes partikelförmiges Material enthalten mit einem mittleren Teilchendurchmesser im Bereich von 0,01 bis 5 $\mu$m, vorzugsweise von 0,02 bis 2,5 $\mu$m. Die Anwesenheit des inerten partikelförmigen Materials bewirkt, daß sich bei der Streckorientierung der Folie bei geeigneten Temperaturen zwischen der Polymermatrix und dem inerten Material Mikrorisse und Mikrohohlräume, sog. Voids, ausbilden, im Bereich derer das sichtbare Licht gebrochen wird. Die Folie erhält dadurch ein opakes Aussehen, was sie für bestimmte Verpackungszwecke, insbesondere auf dem Lebensmittelsektor besonders geeignet macht. Das inerte partikelförmige Material kann anorganischer oder organischer Natur sein. Bei anorganischem Material sind Calciumcarbonat, Aluminiumsilikat, Siliziumdioxid oder Titandioxid, bei organischem Material Polyethylenterephthalat oder Polybutylenterephthalat besonders geeignet, wobei auch die Kombination von anorganischen und/oder organischen Partikeln möglich ist.

Das Copolymere der Deckschicht hat einen Propylengehalt von mehr als 70 Gew.-%, vorzugsweise von mehr als 80 Gew.-%, besonders bevorzugt im Bereich von 90 bis 99 Gew.-%, bezogen auf das Gesamtgewicht des Copolymeren. Der Propylenanteil des Copolymeren besitzt eine Isotaxie von <15 %, insbesondere <6 %. Die mittlere Sequenzlänge $\bar{n}_r$ der syndiotaktischen Sequenzen ist >20, bevorzugt >25. Die Molmassenverteilung des Copolymeren erfüllt die Beziehung

$$M_w = k \cdot M_n,$$

wobei

$M_w$ den Gewichtsmittelwert der Molmassenverteilung,

$M_n$ das Zahlenmittel der Molmassenverteilung darstellen und

k ein Faktor ist, der zwischen 5 und 1, insbesondere zwischen 2 und 3, liegt.

Der Gewichtsmittelwert liegt zwischen 60 000 und 250 000, insbesondere zwischen 90 000 und 160 000. Die mittleren Molmassen können nach üblichen Methoden bestimmt werden, wobei sich insbesondere die Methode der Gelpermeationschromatographie bewährt hat.

Comonomere sind $\alpha$-Olefine mit 2 bis 8 C-Atomen, wobei Ethylen und 1-Buten erfindungsgemäß besonders bevorzugt werden.

In einer besonderen Ausführungsform der Erfindung ist die Folie dreischichtig aufgebaut, wobei die Basisschicht beidseitig Deckschichten trägt. Die Folie kann weiterhin mit einer Barriereschicht ausgestattet sein, um sie für Sauerstoff und/oder Aromastoffe undurchlässig zu machen. In dieser Ausstattung ist sie für besonders empfindliche, insbesondere gegen Aromaverlust empfindliche, Packgüter geeignet. Die chemische Zusammensetzung der Barriereschichten ist im Stand der Technik bekannt, es handelt sich hier um Schichten aus Metallen, Polyamiden, Polyvinylalkohol oder Copolymere enthaltend Polyvinylalkohol. Besonders geeignete Barriereschichten sind beispielsweise in der EP-A-118 060 beschrieben.

Um bestimmte Eigenschaften der erfindungsgemäßen Polyolefinfolie noch weiter zu verbessern, können sowohl die Basisschicht als auch die Deckschicht(en) entsprechende Zusätze in einer jeweils wirksamen Menge enthalten, vorzugsweise Antistatika, Antiblockmittel, Gleitmittel, Stabilisatoren und/oder niedrigmolekulare Harze, die jeweils mit den Polymeren der Basisschicht und der Deckschicht(en) verträglich sind.

Bevorzugte Antistatika sind Alkalialkansulfonate und die im wesentlichen geradkettigen und gesättigten aliphatischen, tertiären Amine mit einem aliphatischen Rest mit 10 bis 20 Kohlenstoffatomen, die mit Omega-Hydroxyalkyl($C_1$-$C_4$)-Gruppen substituiert sind, worunter N,N-bis-(2-hydroxyethyl)-alkylamine mit $C_{10}$-$C_{20}$, vorzugsweise $C_{12}$-$C_{18}$, als Aklylgruppen besonders geeignet sind. Die wirksame Menge an Antistatikum liegt im Bereich von 0,05 bis 3 Gew.-%, bezogen auf die Schicht.

3

Geeignete Antiblockmittel sind anorganische Zusatzstoffe wie Siliciumdioxid, Calciumcarbonat, Magnesiumsilicat, Aluminiumsilicat, Calciumphosphat und dergleichen, nichtionogene Tenside, anionaktive Tenside und/oder unverträgliche organische Polymerisate wie Polyamide, Polyester, Polycarbonate und dergleichen. Die wirksame Menge an Antiblockmittel liegt im Bereich von 0,1 bis 2 Gew.-%, bezogen auf die Schicht.

Beispiele für Gleitmittel sind höhere aliphatische Säureamide, höhere aliphatische Säureester, Wachse und Metallseifen. Die wirksame Menge an Gleitmittel liegt im Bereich von 0,1 bis 2 Gew.-%, bezogen auf die Schicht.

Als Stabilisatoren können die üblichen stabilisierend wirkenden Verbindungen für Ethylen-, Propylen- und andere $\alpha$-Olefinpolymere eingesetzt werden. Die wirksame Menge beträgt im allgemeinen 0,1 bis 2 Gew.-%, bezogen auf die Schicht.

Bei dem empfohlenen niedrigmolekularen Harz handelt es sich um ein natürliches oder synthetisches Harz mit einem Erweichungspunkt von 60 bis 180 °C, vorzugsweise 80 bis 130 °C (bestimmt nach ASTM-E 28). Unter den zahlreichen niedrigmolekularen Harzen sind die Kohlenwasserstoffharze bevorzugt, und zwar in Form der Erdölharze (Petroleumharze), Styrolharze, Cyclopentadienharze und Terpenharze (diese Harze sind in Ullmanns Enzyklopädie der Techn. Chemie, 4. Auflage, Band 2, Seiten 539 bis 553, beschrieben).

Die wirksame Menge an niedermolekularem Harz beträgt 3 bis 15 Gew.-%, vorzugsweise 5 bis 10 Gew.-%, bezogen auf die Schicht.

Nach einer bevorzugten Ausführungsform enthält die Basisschicht (in der die Hauptkomponente ein Propylenhomopolymeres ist) und/oder mindestens eine Deckschicht ein N,N-bis-(2-hydroxyethyl)-($C_{10}$-$C_{20}$)-alkylamin als Antistatikum.

Sofern es zweckmäßig ist, enthalten die Basisschicht und/oder die Deckschicht(en) auch die anderen oben erwähnten Zusätze, vorzugsweise Gleitmittel und Antiblockmittel, in einer jeweils wirksamen Menge.

Weitere geeignete Additive sind z. B. in der BGA-Liste VII. Polypropylen aufgeführt.

Bei Bedarf kann eine Oberflächenbehandlung der Deckschichten erfolgen mit dem Ziel, diese aufnahmefähig zu machen, beispielsweise für Druckfarben. Die Oberflächenbehandlung kann nach einer der bekannten Methoden erfolgen. Bekannte Methoden sind z. B. die elektrische Sprühentladung (Corona) zwischen zwei Elektroden, die Flammbehandlung oder eine Behandlung mit polarisierter Flamme. Vorzugsweise weist die Oberfächenschicht eine Oberflächenpolarität von mehr als 36 mN/m auf.

Die Erfindung soll mit folgendem Beispiel und Vergleichsbeispiel verdeutlicht werden:

Es wird jeweils eine biaxial orientierte Polypropylenfolie hergestellt, die aus einer Polypropylenbasisschicht und einer Deckschicht besteht. Die Folie besitzt eine Gesamtdicke von 20 $\mu$m, wobei auf die Deckschicht 0,7 $\mu$m entfallen.

Die Herstellung erfolgt nach dem bekannten Coextrusionsverfahren. Im Rahmen dieses Verfahrens wird so vorgegangen, daß die der Basisschicht und der Deckschicht der Folie entsprechenden Schmelzen durch eine Flachdüse coextrudiert werden, die durch Coextrusion erhaltene Folie zur Verfestigung abgekühlt wird, die Folie biaxial gestreckt (orientiert), die biaxial gestreckte Folie thermofixiert und an der zur Coronabehandlung vorgesehenen Deckschicht coronabehandelt wird.

Die Basisschicht besteht bei dem Beispiel und dem Vergleichsbeispiel aus einem isotaktischen Propylenhomopolymeren, das folgende Eigenschaften besitzt:

| | |
|---|---|
| $M_w$ | = 273 000 g/mol |
| $M_n$ | = 51 000 g/mol |
| $M_w/M_n$ | = 5,5 |
| $i_5$ | = 19,3 g/10 min |
| I | = 94,7 % |
| S | = 5,3 % |
| $\tilde{n}_m$ | = 57,0 |
| $\tilde{n}_r$ | = 3,2 |
| mm | = 93 % |
| mr | = 3,3 % |
| rr | = 3,7 % |

Die angegebenen Werte haben folgende Bedeutung und sind folgendermaßen gemessen worden:
$M_w$ und $M_n$ wie bereits vorher erwähnt,

$i_5$ = Schmelzindex (gemessen nach DIN 53735 bei 230 °C und 50 N Belastung),

I = Isotaxieindex (mm + $\frac{1}{2}$ mr),

4

S = Syndiotaxieindex (rr + ½ mr),

$\tilde{n}_m$ = mittlere isotaktische Blocklänge

$$\left(1 \ + \ \frac{2 \ mm}{mr}\right),$$

$\tilde{n}_r$ = mittlere syndiotaktische Blocklänge

$$\left(1 \ + \ \frac{2 \ rr}{mr}\right),$$

mm = prozentualer Anteil der Mesobereiche,
mr = prozentualer Anteil der Übergangsbereiche von meso nach racemisch,
rr = prozentualer Anteil der racemischen Bereiche.

Alle Werte zur Stereoregularität wurden gemessen mit Hilfe der $^{13}$C-NMR-Spektroskopie in Übereinstimmung mit J. A. Ewen in J. Am. Chem. Soc. (1984), Band 106, Seiten 6355-6364.

Beispiel 1

Die Deck- bzw. Siegelschicht besteht aus einem syndiotaktischen Ethylen-Propylen-Copolymerisat, in dem das Ethylen statistisch verteilt ist. Der Ethylengehalt betrug 4,6 Gew.-%, berechnet auf das Gesamtgewicht des Copolymerisates. Der syndiotaktische Propylenanteil des Copolymerisates weist folgende Eigenschaften auf:

| | |
|---|---|
| $M_w$ | = 115 000 g/mol |
| $M_n$ | = 55 000 g/mol |
| $M_w/M_n$ | = 2,1 |
| $i_5$ | = 28,0 g/10 min |
| I | = 5,05 % |
| S | = 94,95 % |
| $\tilde{n}_m$ | = 1,5 |
| $\tilde{n}_r$ | = 28,3 |
| mm | = 1,7 % |
| mr | = 6,7 % |
| rr | = 91,6 % |

Vergleichsbeispiel 1

Die Deckschicht besteht aus einem Ethylen-Propylen-Copolymerisat mit im wesentlichen isotaktischem Propylenanteil, das bei der Firma Solvay unter der Bezeichnung ELTEX [(R)] PKS 400 erhältlich ist. Sein Ethylengehalt beträgt ebenfalls 4,6 Gew.-%, bezogen auf das Gesamtgewicht des Copolymerisates.

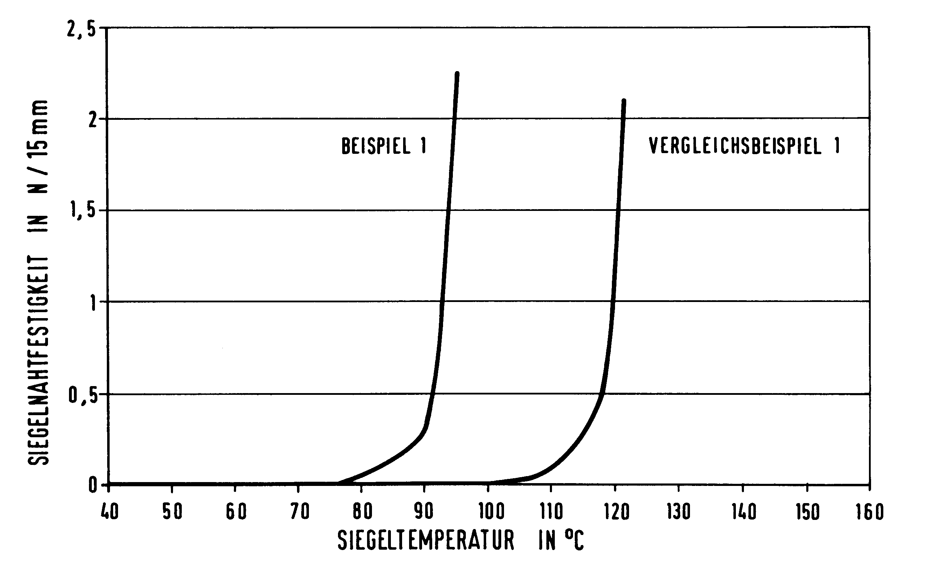

Die überlegenen Siegeleigenschaften der erfindungsgemäßen Folie (Beispiel 1) gehen aus der beigefügten Abbildung hervor. Die übrigen physikalischen Parameter der Folie nach Beispiel 1 sind im Vergleich zu der Folie des Vergleichsbeispiels VB 1 in der Tabelle angegeben.

Der Glanz der Folien wurde mit einem Reflektometer von Dr. Lange, Neuss (Deutschland), ermittelt, der Meßwinkel betrug 85°.

Die Kratzfestigkeit wurde in Anlehnung an DIN 53 754 bestimmt. Für die Bestimmung der Kratzfestigkeit wurde das Abriebmeßgerät Taber Modell 503 Abraser der Firma Teledyne Taber benutzt, wobei Reibräder der Marke Calibrade R H18, die mit 250 g belastet wurden, eingesetzt wurden. Unter Kratzfestigkeit bzw. Kratzempfindlichkeit versteht man die Trübungszunahme der verkratzten Folie im Vergleich zur Originalfolie nach 50 Umdrehungen des Probentellers. Die Kratzfestigkeit wird mit sehr gut bezeichnet, wenn die Trübungszunahme <20 % beträgt, mit mäßig, wenn die Trübungszunahme bei 20 bis 25 % liegt, und mit schlecht bei Trübungszunahmen von größer 25 %. Die Trübung der Folie wurde in Anlehnung an ASTM-D 1003-52 gemessen, wobei anstelle einer 4°-Lochblende eine 1°-Spaltblende eingesetzt und die Trübung in Prozent für vier übereinanderliegende Folienlagen angegeben wurde. Die vier Lagen wurden gewählt, da man hierdurch den optimalen Meßbereich ausnutzt. Die Trübungsbewertung erfolgte mit ≦15 % = sehr gut, ≧15 % bis 25 % = mäßig und >25 % = schlecht.

Die Folien wurden unter gleichen Bedingungen einer elektrischen Coronabehandlung unterzogen. Während bei Beispiel 1 eine Oberflächenpolarität von 40 mN/m erreicht wurde, zeigte die Folie gemäß VB 1 trotz identischer Verfahrensweise eine Oberflächenpolarität von nur 39 mN/m.

Tabelle

|  | Glanz | Kratzfestigkeit | Trübung | Oberflächenbehandelbarkeit | Bedruckbarkeit |
|---|---|---|---|---|---|
| Beispiel 1 | sehr gut | sehr gut | sehr gut | sehr gut | sehr gut |
| VB 1 | mäßig | mäßig | gut | gut | sehr gut |

**Patentansprüche**

1. Polyolefinfolie, die aus einer Polypropylenbasisschicht und mindestens einer Deckschicht aus einem Propylenpolymeren besteht, dadurch gekennzeichnet, daß die Basisschicht ein Propylenpolymeres enthält, das zum überwiegenden Teil aus Propylen besteht und einen Schmelzpunkt von 140 °C oder höher besitzt, und die Deckschicht aus einem Copolymeren eines α-Olefins mit 2 bis 8 C-Atomen mit syndiotaktischem Propylen aufgebaut ist.

2. Folie nach Anspruch 1, dadurch gekennzeichnet, daß das Propylenpolymer der Basisschicht ein isotaktisches Polypropylen mit einem n-heptanlöslichen Anteil von 15 Gew.-% und weniger, ein Copolymer von Ethylen und Propylen mit einem Ethylengehalt von 10 Gew.-% oder weniger, ein Copolymer von Polypropylen mit $C_4$-$C_8$-α-Olefinen mit einem $C_4$-$C_8$-α-Olefingehalt von 10 Gew.-% oder weniger ist.

3. Folie nach Anspruch 1 oder 2, dadurch gekennzeichnet, daß die Basisschicht aus einem isotaktischen Polypropylen aufgebaut ist.

4. Folie nach einem der Ansprüche 1 bis 3, dadurch gekennzeichnet, daß der syndiotaktische Propylenanteil des Copolymeren der Deckschicht eine Isotaxie von <15 %, vorzugsweise <6 %, besitzt.

5. Folie nach einem der Ansprüche 1 bis 4, dadurch gekennzeichnet, daß die mittlere Sequenzlänge $ñ_r$ der syndiotaktischen Sequenzen >20 ist, bevorzugt >25.

6. Folie nach einem der Ansprüche 1 bis 5, dadurch gekennzeichnet, daß die Molmassenverteilung des Copolymeren der Deckschicht die folgende Beziehung:

$$M_w = k \cdot M_n$$

erfüllt, wobei
$M_w$    den Gewichtsmittelwert der Molmassenverteilung,
$M_n$    das Zahlenmittel der Molmassenverteilung darstellen und
k    ein Faktor ist, der zwischen 5 und 1, vorzugsweise zwischen 2 und 3, liegt.

7. Folie nach einem der Ansprüche 1 bis 6, dadurch gekennzeichnet, daß das nicht syndiotaktische Comonomere des Copolymerisates der Deckschicht Ethylen oder 1-Buten ist.

8. Folie nach einem der Ansprüche 1 bis 7, dadurch gekennzeichnet, daß die Basischicht beidseitig Deckschichten trägt.

9. Folie nach einem der Ansprüche 1 bis 8, dadurch gekennzeichnet, daß sowohl die Basisschicht als auch die Deckschicht(en) weitere Zusätze enthalten, vorzugsweise Antistatika, Antiblockmittel, Gleitmittel, Stabilisatoren und/oder niedrigmolekulare Harze, die jeweils mit den Polymeren der Basisschicht und der Deckschicht(en) verträglich sind.

**10.** Folie nach einem der Ansprüche 1 bis 9, dadurch gekennzeichnet, daß die Basisschicht und/oder mindestens eine Deckschicht ein N,N-bis-(2-hydroxyethyl)-($C_{10}$-$C_{20}$)-alkylamin, ein polyethermodifiziertes Polydiorganosiloxan oder eine Mischung dieser beiden enthält.

**11.** Folie nach einem der Ansprüche 1 bis 10, dadurch gekennzeichnet, daß mindestens eine Oberflächenschicht oberflächenbehandelt ist und auf der behandelten Oberfläche eine Oberflächenpolarität von mehr als 36 mN/m aufweist.

## Claims

**1.** A polyolefin film which comprises a polypropylene base layer and at least one top layer of a propylene polymer, wherein the base layer comprises a propylene polymer which is predominantly composed of propylene and has a melting point of 140°C or higher, and the top layer is composed of a copolymer of an $\alpha$-olefin having 2 to 8 carbon atoms with a syndiotactic propylene.

**2.** The film as claimed in claim 1, wherein the propylene polymer of the base layer is an isotactic polypropylene having an n-heptane-soluble content of 15% by weight or less, a copolymer of ethylene and propylene having an ethylene content of 10% by weight or less, or a copolymer of polypropylene and $C_4$-$C_8$-$\alpha$-olefins having a $C_4$-$C_8$-$\alpha$-olefin content of 10% by weight or less.

**3.** The film as claimed in claim 1 or 2, wherein the base layer is composed of an isotactic polypropylene.

**4.** The film as claimed in any of claims 1 to 3, wherein the syndiotactic propylene content of the copolymer of the top layer possesses an isotacticity of < 15%, preferably < 6%.

**5.** The film as claimed in any of claims 1 to 4, wherein the mean length of sequence $\tilde{n}_r$ of the syndiotactic sequences is > 20, preferably > 25.

**6.** The film as claimed in any of claims 1 to 5, wherein the molar mass distribution of the copolymer of the top layer corresponds to the following relation:

$$M_w = k \cdot M_n$$

where
$M_w$     is the weight average of the molar mass distribution,
$M_n$     is the number average of the molar mass distribution and
k     is a factor which is between 5 and 1, in particular between 2 and 3.

**7.** The film as claimed in any of claims 1 to 6, wherein the non-syndiotactic comonomer of the copolymer of the top layer is ethylene or 1-butene.

**8.** The film as claimed in any of claims 1 to 7, wherein the base layer carries top layers on either side thereof.

**9.** The film as claimed in any of claims 1 to 8, wherein both the base layer and the top layer(s) contain further additives, preferably antistatic agents, anti-blocking agents, lubricants, stabilizers and/or low-molecular-weight resins, which are in each case compatible with the polymers of the base layer and of the top layer(s).

**10.** The film as claimed in any of claims 1 to 9, wherein the base layer and/or at least one top layer contains an N,N-bis-(2-hydroxyethyl)-($C_{10}$-$C_{20}$)-alkylamine, a polyether-modified polydiorganosiloxane or a mixture of these two substances.

**11.** The film as claimed in any of claims 1 to 10, wherein at least one surface layer has been surfacetreated and shows a surface polarity of more than 36 mN/m on the treated surface.

**Revendications**

1. Pellicule polyoléfinique consistant en une couche de base en polypropylène et au moins une couche de recouvrement en un polymère de propylène, caractérisée en ce que la couche de base contient un polymère de propylène qui est en majeure partie constitué de propylène et a un point de fusion de 140°C ou plus, et la couche de recouvrement est constituée d'un copolymère d'une α-oléfine ayant de 2 à 8 atomes de carbone et d'un propylène syndiotactique.

2. Pellicule selon la revendication 1, caractérisée en ce que le polymère de propylène de la couche de base est un polypropylène isotactique ayant une fraction soluble dans le n-heptane de 15 % en poids ou moins, un copolymère d'éthylène et de propylène ayant une teneur en éthylène de 10 % en poids ou moins, un copolymère de propylène avec des α-oléfines en $C_4$-$C_8$, ayant une teneur en α-oléfines en $C_4$-$C_8$ de 10 % en poids ou moins.

3. Pellicule selon la revendication 1 ou 2, caractérisée en ce que la couche de base est constituée d'un polypropylène isotactique.

4. Pellicule selon l'une des revendications 1 à 3, caractérisée en ce que la fraction propylène syndiotactique du copolymère de la couche de recouvrement a une isotaxie <15 %, de préférence <6 %.

5. Pellicule selon l'une des revendications 1 à 4, caractérisée en ce que la longueur moyenne $\overline{n}_r$ des séquences syndiotactiques est >20, de préférence >25.

6. Pellicule selon l'une des revendications 1 à 5, caractérisée en ce que la distribution de masses moléculaires du copolymère de la couche de recouvrement satisfait à la relation suivante

$$M_w = k.M_n$$

   $M_w$     représentant la valeur moyenne en poids de la distribution de masses moléculaires,
   $M_n$     représentant la valeur moyenne en nombre de la distribution de masses moléculaires, et
   k         étant un facteur compris entre 5 et 1, de préférence entre 2 et 3.

7. Pellicule selon l'une des revendications 1 à 6, caractérisée en ce que le comonomère non syndiotactique du copolymère de la couche de recouvrement est l'éthylène ou le 1-butène.

8. Pellicule selon l'une des revendications 1 à 7, caractérisée en ce que la couche de base porte des deux côtés des couches de recouvrement.

9. Pelllicule selon l'une des revendications 1 à 8, caractérisée en ce qu'aussi bien la couche de base que la(les) couche(s) de recouvrement contiennent d'autres additifs, de préférence des agents antistatiques, agents anti-adhérence de contact, lubrifiants, stabilisants et/ou résines à faible masse moléculaire, qui sont dans chaque cas compatibles avec les polymères de la couche de base et de la(des) couche(s) de recouvrement.

10. Pellicule selon l'une des revendications 1 à 9, caractérisée en ce que la couche de base et/ou au moins une couche de recouvrement contient(tiennent) une N,N-bis(2-hydroxyéthyl)-alkyl($C_{10}$-$C_{20}$)-amine, un polydiorganosiloxane ou un mélange de ces deux composés.

11. Pellicule selon l'une des revendications 1 à 10, caractérisée en ce qu'au moins une couche superficielle est traitée en surface et présente sur la surface traitée une polarité superficielle de plus de 36 mN/m.

SIEGELNAHTFESTIGKEIT IN N / 15 mm

SIEGELTEMPERATUR IN °C

BEISPIEL 1

VERGLEICHSBEISPIEL 1

EP 0 484 817 B1

6